# EUROPEAN PATENT APPLICATION

(11) **EP 2 135 511 A1**
(43) Date of publication of application: **23.12.2009**
(21) Application number: 08750384.3
(22) Date of filing: 13.03.2008
(51) Int. Cl.: A23C 11/04, A23C 19/055

(54) **METHOD FOR SUBSTITUTING SATURATED MILK FATS WITH NON-HYDROGENATED VEGETABLE OILS**

(30) Priority: 16.03.2007 ES 200700710
(71) Applicant: Universidad Politécnica de Madrid, 28040 Madrid (ES)
(72) Inventor: ENAMORADO SOLANES, Rafael, E-28040 Madrid (ES)
(74) Representative: Carvajal y Urquijo, Isabel
(86) International application number: PCT/ES2008/000141
(87) International publication number: WO 2008/113877

(57) **Abstract**

The invention relates to a method for substituting saturated milk fats with unsaturated fats, mainly from olive oil. The invention is suitable for use in all types of curd and cheese production. The invention can be used to obtain very healthy products that do not have the high saturated fat and cholesterol content of conventionally produced cheeses and curds. The inventive method is performed with the emulsion technique using high-speed mixers employed in other food industries. The associated industrial production costs are similar to current costs.

## Description

### Background of the invention

The present invention refers to the technical field of the dairy product industry and the processed dairy products subsector.

The present invention is an industrial process which differs from current ones in the application, before the curdling, of a basic emulsion operation which is very common in the production of other processed products, such as emulsion-based meat products. The emulsion with the milk presents a difference with respect to current techniques, which only incorporate products to improve organoleptic qualities.

The products obtained through this process are cheeses and curds which are produced from all kinds of milks, without cholesterol or their saturated fat, which have been replaced by non-hydrogenated vegetable oil rich in n3, n6, n9, that is, with unsaturated fatty acids: n-9 oleic acid (omega-9); n-6 linoleic acid and n-9 (omega-6 and omega-9); n-3 linoleic acid; n-6 and n-9 (omega-3, omega-6, omega-9). These mono and polyunsaturated fatty acids, among other advantages, reduce the incidence of harmful LDL cholesterol and contribute to the increase of beneficial HDL cholesterol. This innovation offers the advantage of its high benefit for health, allowing a higher consumption, of approximately 100 grams per day, while the consumption of current cheeses must be restricted to less than 50 grams per day.

Obtaining the cheeses and curds using current techniques offers products with high levels of cholesterol and saturated fat, which can produce health unbalances, thus the consumption being restricted to less than 50 grams per day.

This high concentration of saturated fatty acids is currently obtained through conventional procedures consisting of adding curds to milk, thus eliminating sera and concentrating the saturated fat and cholesterol, together with milk caseins.

The products currently obtained, known as cheese, contain mainly high saturated fat and cholesterol content.

The generalization of dairy products with low levels of saturated fat and cholesterol is mainly related to the adaptation of diets to the prevention of cardiovascular and obesity problems.

In most of the different varieties of cheeses, cholesterol levels are between 70 and 120mg/100g of cheese and between 10 and 40% of saturated fat.

In cheese substitutes, there have been described procedures, through the addition of hydrogenated vegetable fat to partially skimmed milks (Patent Application GB 2223927 A), to substitute milk saturated fat by hydrogenated vegetable fat, which do not add the health benefits of mono and polyunsaturated fatty acids, as claimed in this patent. This production procedure proposes, in order to stabilize the emulsions, the use of high pressures between 7 and 250kgf/cm², but differs from the patent claimed in that the use of these high pressures creates an unbalance in the organoleptic conditions of the cheeses obtained.

In order to reduce total cholesterol (harmful LDL and beneficial HDL cholesterol) in cheeses of 80% per gram of fat of the initial milk, the procedures are described in the Patent Application ES 2109188 A1. In these procedures, cyclodextrin is used to form complexes with cholesterol, which have to be eliminated later through different washing and centrifugation techniques. This technique introduces foreign chemical elements to eliminate cholesterol, which can have health consequences which are not entirely well-known. Besides, washing and centrifugation techniques modify usual characteristics of cheeses and curds obtained without those techniques. The present patent does not require the addition of any foreign chemical element. Instead, it adds natural elements which reduce harmful cholesterol, LDL, and increase beneficial cholesterol, HDL.

Through the technological process of ultrafiltration it is possible to obtain fresh cheese with reduced fat content (Patent Application ES 2133120 A1). The patent being claimed, compared with ultrafiltration, offers the following advantages: a) Milk does not undergo a high pressure process such as ultrafiltration, b) In the patent being claimed it is possible not only to reduce fat content harmful for health, but also mono and polyunsaturated fatty acids are added, which are greatly beneficial for health.

### Detailed description of the invention

It is a process that consists of substituting saturated fat of skimmed milk, with unsaturated fat, mainly from olive oil. The invention can be applied to all kind of curd and cheese production. With this invention, there are obtained very healthy products, without the high saturated fat and cholesterol content of cheese and curds produced using conventional methods. The production is carried out using the emulsion technique through the application of high-speed mixers employed in other food industries. The industrial production costs are similar to current costs.

The present invention refers to a new industrial substitution process, in skimmed milks, of their saturated fats with one of the following elements:
- Non-hydrogenated vegetable oils rich in n-3, n-6 and n-9, which are mono and polyunsaturated fatty acids
- Oil macerations, of all kind of aromatic and/or medicinal plants
- All the range of lactic ferments required to obtain all the different types of cheese.

As regards the first of the elements, this industrial process enables to incorporate, through the emulsion process, without pressure, all kinds of vegetable oils in liquid state to the curdling process normal temperatures, which range between 33°C and 40°C.

As regards the second and third elements, the invention incorporates a new industrial method, not used in traditional cheese production, such as the addition and incorporation to the milk, before the curdling, of any lipid component (lipid solutions of natural products which do not vary the curd Ph), aromas and flavors desired using a mixing technique at high rotation speed, between 1,000 and 3,000rpm. This incorporation is carried out mixed with the oil.

The procedure consists of producing an emulsion with skimmed milk and the oil to be incorporated, until obtaining a mixture with a point of stability which is enough to prevent said emulsion from breaking when the curdling is complete, which is carried out leaving it to repose. At this step of curd production left to repose, the stabilization of this type of emulsion is complete.

The new process can be carried out in machines with stirring and cutting blades which rotate at between 1,000 and 3,000rpm, and with capacity to manage great masses, which enables to make the process more profitable.

### An embodiment

The substitution process could be carried out in the following way:
Step 1: The skimmed milk is pasteurized at 70°C for 1 minute.
Step 2: The pasteurized milk with 3-4% of non-hydrogenated vegetable oil is emulsified using the basic emulsion technique of the non-hydrogenated oils and the water of the milk. To that end, a machine is used which operates at between 1,000 and 3,000rpm, stirs the mixture until the regular tests performed enable to maintain the stabilization of the emulsion for at least 30 minutes, that is, without splitting the emulsion of oil with the water of the milk. This oil can be previously mixed with curds and industrial additives to provide aromas and flavors.
Step 3: From step 2, all operations are similar to any current procedure to obtain cheeses and curds, such as heating the milk at 35-40°C, incorporating calcium chloride, incorporating the corresponding ferments and curds. Therefore, it will depend on the kind of cheese and/or curds desired.

## Claims

1. Method for substituting saturated milk fats with non-hydrogenated vegetable oils **characterized in that**, after the pasteurization of milk and before the curdling and cheese or curd molding stage, there is a process of emulsion of milk with non-hydrogenated oil rich in n-3, n-6 and n-9, in a ratio of 3-4% of oil through machines with stirring blades, which rotate at between 1,000 and 3,000rpm, until a mixture which remains stable is obtained, without splitting the emulsion obtained, for at least 30 minutes.

2. Method for substituting saturated milk fats with non-hydrogenated vegetable oils according to claim 1, **characterized in that** it enables, before obtaining the curd, to incorporate oil, aromas, flavor and lipid solutions which do not alter the curd pH.

3. Method for substituting saturated milk fats with non-hydrogenated vegetable oils according to claim 1, **characterized in that** it incorporates non-hydrogenated oil macerations, in the form of a stable emulsion, of all kinds of aromatic and/or medicinal plants to obtain different kinds of cheeses.

4. Method for substituting saturated milk fats with non-hydrogenated vegetable oils according to claim 1, **characterized in that** it incorporates, besides non-hydrogenated oils, lactic ferments required to obtain the different kinds of cheeses desired.
